# EUROPÄISCHE PATENTSCHRIFT

(11) **EP 0 876 266 B1**
(45) Veröffentlichungstag und Bekanntmachung des Hinweises auf die Patenterteilung: **10.10.2001**
(21) Anmeldenummer: 97908121.3
(22) Anmeldetag: 17.01.1997
(51) Int. Cl.: B60R 21/22

(54) **VORRICHTUNG ZUM SCHUTZ VON INSASSEN EINES KFZ**
DEVICE FOR PROTECTING MOTOR VEHICLE OCCUPANTS
DISPOSITIF PERMETTANT DE PROTEGER LES OCCUPANTS D'UNE AUTOMOBILE

(30) Priorität: 23.01.1996 DE 19604014
(43) Veröffentlichungstag der Anmeldung: 11.11.1998
(73) Patentinhaber: TAKATA - PETRI Aktiengesellschaft, 63743 Aschaffenburg (DE)
(72) Erfinder: ADOMEIT, Heinz-Dieter, D-10623 Berlin (DE)
(74) Vertreter: Bärmann, Klaus, Dipl.-Ing.
(86) Internationale Anmeldenummer: DE9700115
(87) Internationale Veröffentlichungsnummer: WO9727084

(56) Entgegenhaltungen:
- GB-A- 2 267 065
- GB-A- 2 272 670
- US-A- 4 966 388
- US-A- 5 048 234
- RESEARCH DISCLOSURE, Nr. 375, 1.Juli 1995, Seite 470 XP000524786 "SIDE IMPACT PROTECTION DEVICE"
- PATENT ABSTRACTS OF JAPAN vol. 018, no. 602 (M-1705), 16.November 1994 & JP 06 227350 A (TOYOTA MOTOR CORP), 16.August 1994,
- PATENT ABSTRACTS OF JAPAN vol. 095, no. 008, 29.September 1995 & JP 07 117610 A (TOYODA GOSEI CO LTD;OTHERS: 01), 9.Mai 1995,

## Beschreibung

Die Erfindung betrifft eine Vorrichtung zum Schutz von Insassen eines KFZ nach dem Oberbegriff des Anspruchs 1.

Eine derartige Vorrichtung ist aus der Schrift GB-A-2 272 670 bekannt.

Sicherheitsvorrichtungen für den Schutz von Fahrzeuginsassen bei seitlichem Aufprall unter Verwendung von Airbags sind bekannt. So ist aus der DE 43 07 421 A1 eine Sicherheitsvorrichtung bekannt, bei der zwischen einer Hüfte einer Person, die auf einem Fahrzeugsitz sitzt und einer Fahrzeugtür ein Airbag angeordnet ist. Die Aufblasvorrichtung und der Airbag sind an dem Fahrzeugsitz befestigt, so daß die Lage des Airbags bezüglich des Insassen bei Verstellung des Sitzes nicht verändert wird. Diese Sicherheitsvorrichtung schützt vor allem den Hüftbereich des Fahrzeuginsassen.

Weiterhin ist aus der DE 43 28 528 A1 ein Fahrzeugsitz bekannt, mit dem eine Gassack-Aufprall-Schutzeinheit gegen einen Seitenaufprall des Fahrzeugs verbunden ist. Der aufgeblasene Gassack dieser Schutzeinheit liegt zwischen der Kopf-/Halspartie des Insassen und der unmittelbar benachbarten Seitenstruktur des Fahrzeugs, d.h. der Gassack schützt vor allem den Oberkörper und den Kopf des Fahrzeuginsassen.

Diese Vorrichtungen weisen den Nachteil auf, daß die aufgeblasenen, Gassäcke, mit denen der Fahrzeuginsasse unmittelbar Kontakt bekommt, durch diesen auf einer kleinen Fläche belastet werden, da der Fahrzeuginsasse in seiner Lateralansicht eine geringe Fläche aufweist.

Dieser Nachteil soll durch eine aus der DE 40 38 659 A1 bekannten Energie absorbierenden Fahrzeugtür beseitigt werden. Diese Fahrzeugtür besteht aus einer Außen- und einer Innentafel, die aneinander befestigt sind. Zwischen diesen besteht ein Raum zum Anbringen des Fensterhebers und anderer in der Tür untergebrachter Bestandteile. Eine an der Innentafel angebrachte Türabdecktafel-Anordnung enthält eine Abdecktafel aus im wesentlichen starrem Material. Zwischen der Innentafel und der Abdecktafel ist ein Eenergie absorbierend zusammenbrechbares Element vorgesehen. Dieses Element bricht bei einem Seitenaufprall zusammen und soll die dabei auftretende Energie absorbieren. Die Abdecktafel besitzt strukturell geschwächte Abschnitte, vorzugsweise Schlitze, wodurch die Abdecktafel bei einem Seitenaufprall vorhersehbar nachgibt. Der Fahrzeuginsasse hat bei einem Seitenaufprall Kontakt mit der starren Abdecktafel, so daß die Insassenbelastung auf eine größere Fläche verteilt wird.

Der Nachteil dieser Fahrzeugtür besteht darin, daß die Tür wegen des zusätzlich erforderlichen Energie absorbierenden Materials eine große Dicke aufweist, wodurch der Fahrgastraum verkleinert wird.

Der Erfindung liegt die Aufgabe zugrunde, bei einer Schutzvorrichtung gegen Seitenaufprall unter Verwendung eines aufblasbaren Gassackes die Belastung des aufgeblasenen Gassackes durch den Insassen beim Seitenaufprall auf eine größere Gassackfläche zu verteilen.

Erfindungsgemäß wird das gemäß den kennzeichnendnen Merkmalen des Anspruchs 1 erreicht.

Bei einer Vorrichtung zum Schutz von Insassen eines KFZ bei seitlichem Aufprall unter Verwendung eines aufblasbaren Gassackes, der hinter einem steifen, bewegbaren Verkleidungsteil einer Tür- oder der Karosserieverkleidung angeordnet ist, wobei das bewegbare Verkleidungsteil durch den sich aufblasenden Gassack in Richtung des zu schützenden Fahrzeuginsassen bewegbar ist, und wobei das bewegbare Verkleidungsteil während des Aufblasens und nach dem Aufblasen des Gassackes zwischen diesem und dem Fahrzeuginsassen verbleibt, besteht erfindungsgemäß das bewegbare Verkleidungsteil aus mehreren gelenkig miteinander verbundenen Abschnitten, die aus einer in Richtung des gefalteten Gassackes gewölbten Ruhelage durch den sich aufblasenden Gassack in eine entgegengesetzte, dem zu schützenden Fahrzeuginsassen zugekehrte Lage bringbar sind.

Diese Vorrichtung weist den Vorteil auf, daß der aufblasbare Gassack als Energie absorbierendes Bauteil im nicht aufgeblasenen Zustand in einer üblichen Fahrzeugtür oder in einer üblichen Fahrzeugkarosserie unterzubringen ist, so daß der Innenraum des Fahrzeugs nicht verkleinert wird. Andererseits kommt der Fahrzeuginsasse bei einem Seitenaufprall nicht direkt mit dem Gassack sondern mit dem zwischen ihm und dem Gassack vorgesehenen steifen Verkleidungsteil in Berührung. Dieses bewirkt eine Verteilung der Insassenbelastung auf eine größere Fläche des Gassackes als beim direkten Eindringen eines Körperteils in den Gassack.

Die Gelenke verlaufen dabei im wesentlichen parallel und es ist zweckmäßig, das die Gelenke zumindest annähernd senkrecht verlaufen.

Die Bewegbarkeit des Verkleidungsteils wird insbesondere dadurch ermöglicht, daß dieses zumindest auf einem Teilabschnitt seines Randes durch den sich aufblasenden Gassack von der benachbarten Verkleidung abreißbar ist.

Bei dieser Ausführungsform reißen die Ober- und Unterkanten des bewegbaren Verkleidungsteils während des Aufblasens des Gassackes von der umgebenden Verkleidung ab. Anschließend schnappen die gelenkig miteinander verbundenen Abschnitte unter dem Einfluß des sich aufblasenden Gassackes aus der Ruhelage über eine mittlere labile Lage in zweite stabile, dem Fahrzeuginsassen zugekehrte Lage. Bei diesem Vorgang biegen sich zumindest einige Abschnitte elastisch durch.

Die Bewegung des bewegbaren Verkleidungsteils in Richtung des Insassen wird also nicht durch diesen sondern durch bewegbare Abschnitte des Verkleidungsteils begrenzt. Vorzugsweise ist ein mittlerer größerer Abschnitt vorgesehen, an den in Längsrichtung des Fahrzeugs zu beiden Seiten kleinere Abschnitte angelenkt sind. Der Gassack kann sich beim Aufblasen nach unten und oben über das Verkleidungsteil hinaus erstrecken.

Es ist zweckmäßig, daß das bewegbare Verkleidungsteil viereckig ist.

Die Verkleidung besteht vorzugsweise aus Leichtbaumaterial. Insbesondere ist vorgesehen, daß die Verkleidung aus mit Epoxidharz gepreßtem Hanf oder Flachs besteht, wobei die Verkleidung an den Reißkanten und an den scharnierartigen Kanten frei von Epoxidharz ist. Dadurch erhält das bewegbare Verkleidungsteil einerseits eine ausreichende Steifigkeit und andererseits wird aufgrund der Materialeigenschaften des Hanfes bzw. Flachses an den Gelenk- und Reißstellen eine ausreichende Beweglichkeit bzw. Abrißmöglichkeit erzielt. Ob das eine oder andere erzielt wird, kann außer durch unterschiedliche Materialstärken durch unterschiedliche Preßkräfte an diesen Stellen beeinflußt werden.

Das bewegbare Verkleidungsteil kann sich z.B. als Bestandteil der Verkleidung einer Tür in vertikaler Richtung zwischen der Armlehne und dem Fenster und in Fahrzeuglängsrichtung zwischen dem Handgriff und einem Türpfosten erstrekken.

Das bewegbare Verkleidungsteil weist vorzugsweise eine geringere Grundfläche als der aufgeblasene Gassack auf. Dadurch wird der Vorgang gefördert, daß sich der aufgeblasene Gassack über das bewegbare Verkleidungsteil hinaus erstreckt.

Die Erfindung soll in Ausführungsbeispielen anhand von Zeichnungen näher erläutert werden. Es zeigen:

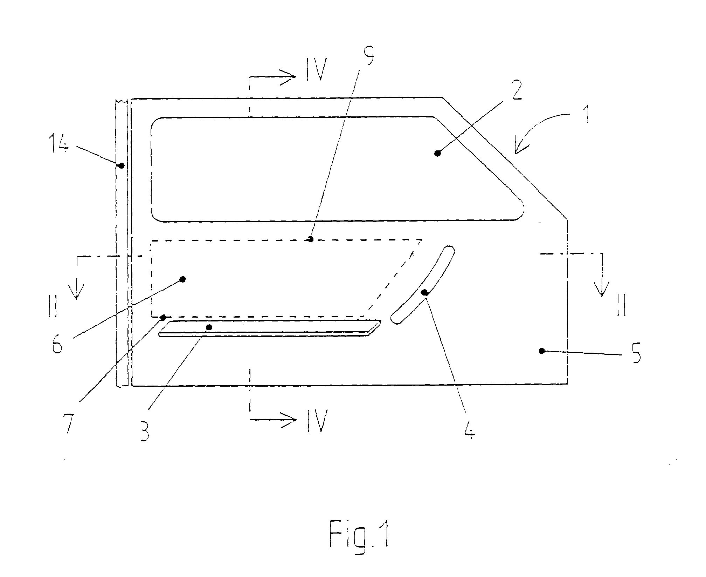

- Fig. 1: die Ansicht einer Fahrzeugtür von innen gesehen;
- Fig. 2: einen Längsschnitt durch eine Fahrzeugtür gemäß der Linie II - II mit einem bewegbaren Verkleidungsteil bei gefaltetem Gassack;
- Fig. 3: den Schnitt nach Fig. 2 mit aufgeblasenem Gassack;
- Fig. 4: 1 einen Schnitt durch die Tür gemäß der Linie IV-IV der Fig. 1 mit gefaltetem Gassack;
- Fig. 5: den Schnitt nach Fig. 4 mit aufgeblasenem Gassack;

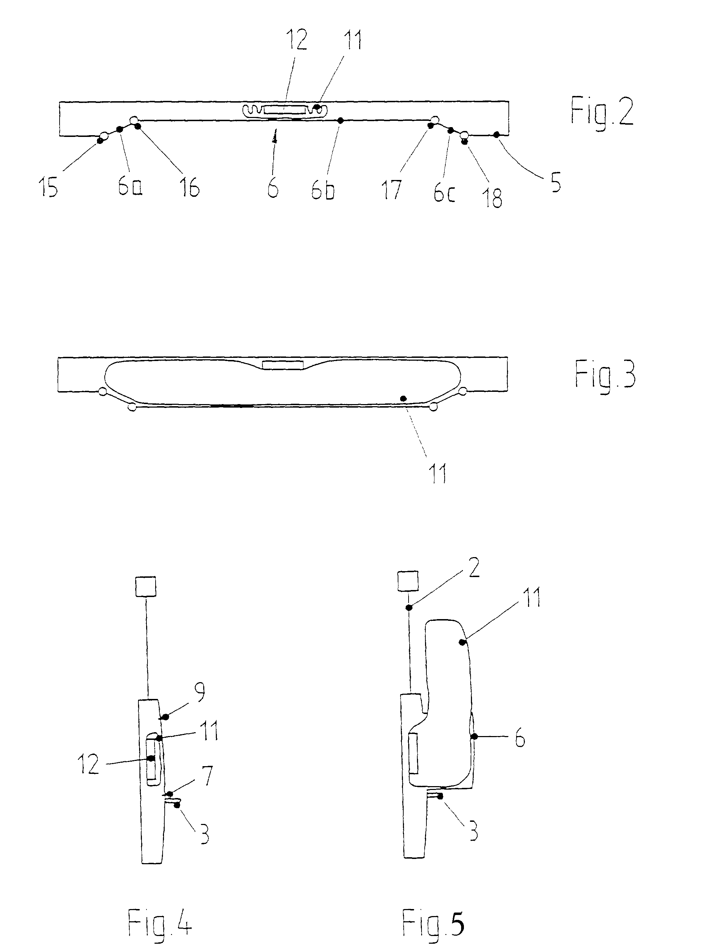

Eine Fahrzeugtür 1, im vorliegenden Fall eine Vordertür, weist in bekannter Weise ein Fenster 2, eine Armlehne 3 und einen Handgriff 4 auf. Die Tür ist mit einer Innenverkleidung versehen, die erfindungsgemäß aus einem festen Verkleidungsteil 5 und einem bewegbaren Verkleidungsteil 6 besteht. Dieses bewegbare Verkleidungsteil erstreckt sich in der vorliegenden Ausführungsform einerseits zwischen dem Fenster 2 und der Armlehne 3 und andererseits zwischen dem Griff 4 und dem hinteren Ende der Tür, das dem B-Pfosten 14 des Kraftfahrzeuges zugeordnet ist. Das bewegbare Verkleidungsteil 6 und das feste Verkleidungsteil 5 werden aus einem Stück hergestellt. Zwischen beiden werden bei der Herstellung Reißkanten 7, 9 und seitliche scharnierartige Verbindungen (Fig. 2) vorgesehen. Diese werden in bekannter Weise bei der Herstellung der Verkleidung z. B. dadurch berücksichtigt, daß das Material an diesen Stellen schwächer ausgebildet wird.

Aus der Fig. 2 ist ersichtlich, daß in der Fahrzeugtür 1 hinter dem bewegbaren Verkleidungsteil 6 ein Gassack 11 mit einem Gasgenerator 12 angeordnet ist. In der Fig. 2 ist der Gassack im gefalteten Zustand dargestellt. Es ist weiter ersichtlich, daß das bewegbare Verkleidungsteil aus mehreren durch Gelenke 15, 16, 17, 18 miteinander verbundenen Abschnitten 6a, 6b, 6c besteht. Im Ruhezustand liegt der mittlere Abschnitt 6b gegenüber der umgebenden Verkleidung zurückgesetzt, d.h. er liegt vom Fahrzeuginsassen aus gesehen weiter außen als die umgebende Verkleidung, wie es in Fig. 2 dargestellt ist.

Wird nun bei einem Seitenaufprall der Gasgenerator gezündet, werden durch das Aufblasen des Gassackes die Abschnitte 6a, 6b, 6c des bewegbaren Verkleidungsteils in das Fahrzeuginnere gedrückt, wobei sie oben und unten an den Reißkanten 7 und 9 von der umgebenden Verkleidung abreißen. Die Abschnitte 6a, 6b, 6c schnappen dabei aus einer stabilen Lage in eine zweite stabile Lage (Fig. 3). Beim Durchtritt durch eine mittlere, instabile Lage (nicht dargestellt) biegen sich die genannten Abschnitte elastisch durch und ermöglichen so den Übergang in die zweite stabile Lage.

Der sich aufblasende Gassack kann sich oben und unten über die Abschnitte 6a, 6b, 6c erstrecken. Aus der Fig. 5 ist ersichtlich, daß sich der Gassack nach oben in den Fensterbereich erstreckt und so den Fahrzeuginsassen zusätzlich vor einem Zusammenprall mit dem Fenster 2 schützt.

Die Fig. 4 zeigt den Schnitt durch die Fahrzeugtür gemäß Fig. 5 mit gefaltetem Gassack.

## Patentansprüche

1. Vorrichtung zum Schutz von Insassen eines KFZ bei seitlichem Aufprall unter Verwendung eines aufblasbaren Gassackes, der hinter einem steifen, bewegbaren Verkleidungsteil einer Tür- oder der Karosserieverkleidung angeordnet ist, wobei das bewegbare Verkleidungsteil durch den sich aufblasenden Gassack in Richtung des zu schützenden Fahrzeuginsassen bewegbar ist, und wobei das bewegbare Verkleidungsteil während des Aufblasens und nach dem Aufblasen des Gassackes zwischen diesem und dem Fahrzeuginsassen verbleibt,
**dadurch gekennzeichnet,**
**daß** das bewegbare Verkleidungsteil (6) aus mehreren gelenkig miteinander verbundenen Abschnitten (6a, 6b, 6c) besteht, die aus einer in Richtung des gefalteten Gassackes (11) gewölbten Ruhelage durch den sich aufblasenden Gassack in eine entgegengesetzte, dem zu schützenden Fahrzeuginsassen zugekehrte Lage bringbar sind.

2. Vorrichtung nach Anspruch 1, **dadurch gekennzeichnet, daß** die Gelenke (15, 16, 17, 18) zumindest annähernd senkrecht verlaufen.

3. Vorrichtung nach Anspruch 1 oder 2, **dadurch gekennzeichnet,** ein mittlerer größerer Abschnitt (6b) vorgesehen ist, an den in Längsrichtung des Fahrzeugs zu beiden Seiten kleinere Abschnitte (6a, 6c) angelenkt sind.

4. Vorrichtung nach mindestens einem der vorhergehenden Ansprüche, **dadurch gekennzeichnet, daß** das bewegbare Verkleidungsteil (6) zumindest auf einem Teilabschnitt seines Randes durch den sich aufblasenden Gassack (11) von der benachbarten Verkleidung (5) abreißbar ist.

5. Vorrichtung nach mindestens einem der vorhergehenden Ansprüche, **dadurch gekennzeichnet, daß** das bewegbare Verkleidungsteil (6) viereckig ist.

6. Vorrichtung nach mindestens einem der vorhergehenden Ansprüche, **dadurch gekennzeichnet, daß** die Verkleidung aus Leichtbaumaterial besteht.

7. Vorrichtung nach mindestens einem der vorhergehenden Ansprüche, **dadurch gekennzeichnet, daß** sich das bewegbare Verkleidungsteil (6) als Bestandteil der Verkleidung einer Fahrzeugtür (1) in vertikaler Richtung zwischen der Armlehne (3) und dem Fenster (2) und in Fahrzeuglängsrichtung zwischen dem Handgriff (4) und einem Türpfosten (14) erstreckt.

8. Vorrichtung nach mindestens einem der vorhergehenden Anspürche, **dadurch gekennzeichnet, daß** das bewegbare Verkleidungsteil (6) eine geringere Grundfläche als der aufgeblasene Gassack (11) aufweist.

## Claims

1. Device for protecting vehicle occupants in the event of side impact by using an inflatable airbag which is mounted behind a rigid movable trim part of a door or coachwork trim wherein the movable trim part can be moved by the inflating airbag towards the vehicle occupant being protected and wherein the movable trim part during inflation and after inflation of the airbag remains between this airbag and the vehicle occupant, **characterised in that** the movable trim part (6) consists of several sections (6a, 6b, 6c) which are connected together for articulated movement and which can be brought from a rest position curved in the direction of the folded airbag (11) through the inflating airbag into an opposite position facing the vehicle occupant who is to be protected.

2. Device according to claim 1 **characterised in that** the articulated joints (15, 16, 17, 18) run at least approximately perpendicular.

3. Device according to claim 1 or 2 **characterised in that** a central larger section (6b) is provided to which smaller sections (6a, 6c) are connected each side in the longitudinal direction of the vehicle.

4. Device according to at least one of the preceding claims **characterised in that** the movable trim part (6) can be torn off at least over a section of its edge from the adjoining trim (5) by the inflating airbag.

5. Device according to at least one of the preceding claims, **characterised in that** the movable trim part (6) is four-sided.

6. Device according to at least one of the preceding claims, **characterised in that** the trim is made from light structural material.

7. Device according to at least one of the preceding claims, **characterised in that** the movable trim part (6) extends as a component part of the trim of a vehicle door (1) in a vertical direction between the arm rest (3) and the window (2) and in the vehicle longitudinal direction between the handle (4) and a door pillar (14).

8. Device according to at least one of the preceding claims **characterised in that** the movable trim part (6) has a smaller base surface than the inflated airbag (11) .

## Revendications

1. Dispositif pour protéger les passagers d'une automobile lors d'un impact latéral en utilisant un sac à gaz gonflable qui est agencé derrière une pièce d'habillage rigide mobile d'un habillage de portière ou de carrosserie, la pièce d'habillage mobile pouvant être déplacée par le sac à gaz en train de se gonfler en direction du passager à protéger, et la pièce d'habillage mobile demeurant pendant le gonflage et après le gonflage du sac à gaz entre celui-ci et le passager, **caractérisé en ce que** la pièce d'habillage mobile (6) est constituée par plusieurs tronçons (6a, 6b, 6c) reliés avec articulation les uns aux autres, susceptibles d'être amenés par le sac à gaz en train de se gonfler depuis une position de repos bombée en direction du sac à gaz replié (11) jusque dans une position opposée orientée vers le passager à protéger.

2. Dispositif selon la revendication 1, **caractérisé en ce que** les articulations (15, 16, 17, 18) s'étendent du moins approximativement verticalement.

3. Dispositif selon l'une ou l'autre des revendications 1 et 2, **caractérisé en ce qu'**il est prévu un tronçon central plus grand (6b) auquel sont reliés en articulation des tronçons plus petits (6a, 6c) des deux côtés en direction longitudinale du véhicule.

4. Dispositif selon l'une quelconque au moins des revendications précédentes, **caractérisé en ce que** la pièce d'habillage mobile (6) peut être arrachée depuis l'habillage voisin (5) au moins sur un tronçon partiel de sa bordure par le sac à gaz (11) en train de se gonfler.

5. Dispositif selon l'une quelconque au moins des revendications précédentes, **caractérisé en ce que** la pièce d'habillage mobile (6) est quadrilatérale.

6. Dispositif selon l'une quelconque au moins des revendications précédentes, **caractérisé en ce que** l'habillage est constitué en matériau de construction légère.

7. Dispositif selon l'une quelconque au moins des revendications précédentes, **caractérisé en ce que** la pièce d'habillage mobile (6) fait partie de l'habillage d'une portière de véhicule (1) et s'étend en direction verticale entre l'accoudoir (3) et la fenêtre (2), et en direction longitudinale du véhicule entre la poignée (4) et un montant de portière (14).

8. Dispositif selon l'une quelconque au moins des revendications précédentes, **caractérisé en ce que** la pièce d'habillage mobile (6) présente une surface de base inférieure à celle du sac à gaz gonflé (11).
